# EUROPEAN PATENT APPLICATION

(11) **EP 4 607 488 A1**
(43) Date of publication of application: **27.08.2025**
(21) Application number: 22962664.3
(22) Date of filing: 17.10.2022
(51) Int. Cl.: G08G 1/00

(54) **INFORMATION PROCESSING DEVICE AND INFORMATION PROCESSING METHOD**

(71) Applicant: Astemo, Ltd., Tokyo 100-0004 (JP)
(72) Inventor: MITA Ryota, Hitachinaka-shi, Ibaraki 312-8503 (JP); KANAI Masayuki, Hitachinaka-shi, Ibaraki 312-8503 (JP); SATO Seiichi, Hitachinaka-shi, Ibaraki 312-8503 (JP)
(74) Representative: MERH-IP Matias Erny Reichl Hoffmann Patentanwälte PartG mbB
(86) International application number: PCT/JP2022/038628
(87) International publication number: WO 2024/084552

(57) **Abstract**

An information processing apparatus in an information collection system that collects information from a plurality of vehicles, the information processing apparatus including: a receiving unit that receives specific scene information including scene type data, sensor data, control data, and position data; a scene adaptation determination unit that performs simulation of a behavior of the vehicle on the basis of the received specific scene information and determines whether or not a result of the simulation adapts to a traffic scene indicated by the scene type data; a parameter conversion unit that converts the specific scene information determined that a result of the simulation adapts to the traffic scene and generates a parameter for reproducing the traffic scene in another information processing apparatus; and a transmission unit that transmits the generated parameter to the another information processing apparatus.

## Description

### Technical Field

The present invention relates to an information processing apparatus.

### Background Art

In recent years, with the advancement of an advanced driving support system represented by a collision damage reduction brake and the introduction of an automatic driving technology, software has become increasingly large-scale, and it is required to maintain and improve the quality of the software. In order to avoid an accident or a trouble due to a decrease in quality of software, it is necessary to collect contents of an accident or a trouble occurring at a use site of an automobile as a traffic scene, and after analysis, modify the software so as to avoid the accident or the trouble, and update the software of the in-vehicle electronic control device. By quickly updating the software and keeping the software in the latest state, it is possible to maintain and improve the quality of the software of the automobile, and it is possible to prevent accidents and troubles.

In this regard, a technology of updating software over the air (OTA) has been developed, and the software can be automatically and quickly updated using the OTA. Regarding the collection of traffic scenes, there is a technique of extracting data corresponding to a time point at which a problem occurs as a problem scene from road test data of an automated driving vehicle.

Background art of the present technical field includes the following prior art. In Patent Literature 1 (JP 2022-33945 A), problem scene data generated at the time of a test by an automatic driving vehicle equipped with a first automatic driving system is acquired, and main obstacle information and non-main obstacle information are determined on the basis of the problem scene data. Generate a virtual obstacle model based on the non-main obstacle information, and determine an actual device that is the device actually present in the test environment to simulate the main obstacle based on the main obstacle information. A scene restoration test method for an automatic driving system that performs a restoration test on an automatic driving vehicle equipped with a second automatic driving system using a virtual obstacle model and an actual device is described.

Further, Patent Literature 2 (JP 2016 -71492 A) discloses a factor analysis device that analyzes factors of an accident/near miss occurring in a vehicle, the factor analysis device including: a common point identification unit that compares vehicle information transmitted from the vehicle with vehicle information accumulated for an accident/near miss occurring in the past to identify a common point; an environmental factor estimation unit that estimates whether or not the factors of the accident/near miss occurring in the vehicle are environmental factors on the basis of the common point; a driver factor estimation unit that estimates whether or not the factors of the accident/near miss occurring in the vehicle are driver factors on the basis of the common point; and a factor determination unit that determines main factors of the accident/near miss of the vehicle on the basis of estimation results by the environmental factor estimation unit and the driver factor estimation unit.

### Citation List

### Patent Literature

PTL 1: JP 2022-33945 A
PTL 2: JP 2016-71492 A

### Summary of Invention

### Technical Problem

A software update system that distributes updated vehicle control software to vehicles collects information on traffic scenes (also simply referred to as traffic scenes) such as accidents and troubles during traveling collected from a plurality of automobiles (also referred to as vehicles). For collecting information on a traffic scene, for example, a plurality of vehicles and a server need to be wirelessly connected, and the vehicles need to transmit the information on the traffic scene to the server when an accident or trouble occurs during traveling. In addition, the server needs to receive information of a traffic scene transmitted from the vehicle.

The information of the traffic scene includes, for example, information for each time such as a size, a speed, a direction, and a position of a vehicle, a pedestrian, a stopping vehicle, a feature, and the like, but there is a problem that the data size increases when the interval of time steps to be recorded is short and the entire recording time is long, and the data of the problem scene of Patent Literature 1 also has this problem.

In the information collection for such software update, when the number of vehicles connected to the server increases, that is, when vehicles equipped with advanced driving support systems and automatic driving technologies become widespread, and the number of operating vehicles becomes several hundred thousand to several million, or more, the transfer of information of traffic scenes having a large data size increases, and there is a problem that a processing load on an information communication network (simply referred to as a network) and a server side increases. In the worst case, there is a possibility that the software update system cannot be operated due to congestion.

By the way, use of a simulator is efficient for analysis of traffic scenes. If the behavior of the vehicle control software is simulated using the collected information of the traffic scene as an input, an accident or a trouble during traveling can be reproduced on the simulator, and problem point extraction and program correction of the vehicle control software can be performed on a desk.

However, the vehicle control software operates to determine the control from the information input for each time and output the optimum control value for the current traveling scene. In other words, as the current control value, a result determined by stacking from the past is used. Therefore, in the case of simulating the behavior of the vehicle control software in the traffic scene, information on the traffic scene that is continuous from the past time sufficiently back from the time at which the accident or the trouble during traveling occurs, that is, information on the traffic scene with a long recording time is required, which facilitates the problem of increasing the data size.

In the method of extracting data corresponding to a time point when a problem occurs as a problem scene as in Patent Literature 1, since data of a large size is handled, there is a problem that a processing load on a network or a server side cannot be reduced when a server collects data.

An object of the present invention is to reduce a processing load of collecting information of a traffic scene collected for updating vehicle control software.

### Solution to Problem

In order to solve the above-described problems, a representative example of the invention disclosed in the present application is as follows. That is, an information processing apparatus in an information collection system that collects information from a plurality of vehicles, the information processing apparatus including: an arithmetic device that executes arithmetic processing and a storage device that can be accessed by the arithmetic device; a receiving unit that receives specific scene information including scene type data indicating a type of a predetermined traffic scene recognized by a vehicle, sensor data collected by a sensor provided in the vehicle, control data by vehicle control software of the vehicle, and position data of the vehicle; a scene adaptation determination unit that simulates, by the arithmetic device, a behavior of the vehicle on a basis of the received specific scene information and determines whether or not a result of the simulation adapts to a traffic scene indicated by the scene type data; a parameter conversion unit that converts, by the arithmetic device, the specific scene information determined that a result of the simulation adapts to the traffic scene, and generates a parameter for reproducing the traffic scene in another information processing apparatus; and a transmission unit that transmits the generated parameter to the another information processing apparatus.

### Advantageous Effects of Invention

According to one aspect of the present invention, it is possible to reduce a processing load when collecting specific scene information of a traffic scene. Problems, configurations, and effects other than those described above will be clarified by the following description of embodiments.

### Brief Description of Drawings

[FIG. 1] FIG. 1 is a configuration diagram of a software update system according to a first embodiment.
[FIG. 2] FIG. 2 is a configuration diagram of a traffic simulation unit of the first embodiment.
[FIG. 3] FIG. 3 is a flowchart of processing executed by a first information processing apparatus of the first embodiment.
[FIG. 4A] FIG. 4A is a diagram illustrating a scene of a collision accident according to the first embodiment.
[FIG. 4B] FIG. 4B is a diagram illustrating a detection area of an external sensor of the own vehicle according to the first embodiment.
[FIG. 5A] FIG. 5A is a diagram illustrating a simulation result of integrated specific scene information according to the first embodiment.
[FIG. 5B] FIG. 5B is a diagram illustrating a setting example of parameters according to the first embodiment.
[FIG. 6] FIG. 6 is a configuration diagram of a software update system according to a second embodiment.
[FIG. 7] FIG. 7 is a configuration diagram of a software update system according to a third embodiment.
[FIG. 8] FIG. 8 is a configuration diagram of a system including a plurality of software update systems and an integrated management server according to a fourth embodiment.

### Description of Embodiments

Hereinafter, an embodiment of an information processing apparatus according to the present invention will be described with reference to the drawings.

### <First Embodiment>

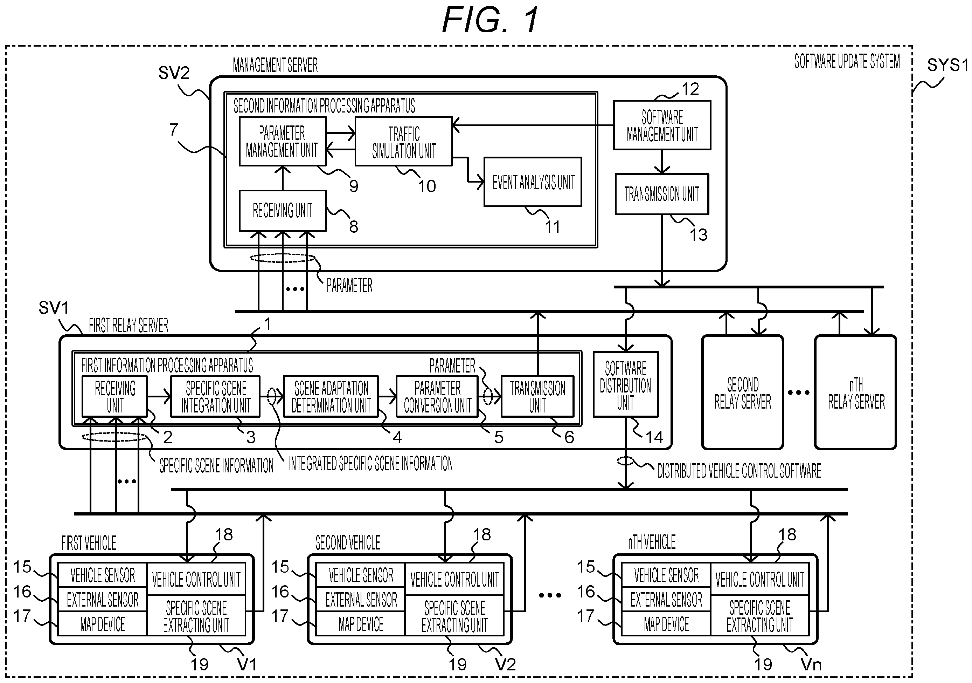

FIG. 1 is a configuration diagram of a software update system SYS1. Hereinafter, the software update system SYS1 will be described with reference to FIG. 1.

The software update system SYS1 includes a management server SV2 and a first relay server SV1, and may include a plurality of relay servers.

In the software update system SYS1, a first information processing apparatus 1 (first relay server SV1) that collects specific scene information from vehicles V1, V2,..., Vn, and a second information processing apparatus 7 (management server SV2) that receives parameters from the first information processing apparatus 1 constitute an information collection system.

The management server SV2 includes a second information processing apparatus 7, a software management unit 12, and a transmission unit 13. The second information processing apparatus 7 includes a receiving unit 8, a parameter management unit 9, a traffic simulation unit 10, and an event analysis unit 11.

The first relay server SV1 includes a first information processing apparatus 1 and a software distribution unit 14. The first information processing apparatus 1 includes a receiving unit 2, a specific scene integration unit 3, a scene adaptation determination unit 4, a parameter conversion unit 5, and a transmission unit 6. The first relay server SV1 is connected to the first vehicle V1, the second vehicle V2,..., and the nth vehicle Vn, aggregates the specific scene information collected from the vehicles V1 to Vn, and transmits the information to the second information processing apparatus 7 as a parameter with a reduced data amount.

The first vehicle V1 includes a vehicle sensor 15, an external sensor 16, a map device 17, a vehicle control unit 18, and a specific scene extracting unit 19. The configuration of the first vehicle V1 is the same in the second vehicle V2 and the third vehicle V3.

The management server SV2 is connected to a plurality of relay servers arranged for each region or area via a network. In FIG. 1, for the sake of explanation, a configuration in which the management server SV2 and the first relay server SV1 are connected is illustrated, and detailed configurations of other relay servers are not illustrated.

The first relay server SV1 is connected to a plurality of vehicles in an area corresponding to the first relay server SV1 by wireless communication. In FIG. 1, for the sake of explanation, a configuration in which a first relay server SV1, a first vehicle V1, a second vehicle V2, and a third vehicle V3 are connected is illustrated, and the other vehicles are not illustrated.

Here, the first vehicle V1 will be described.

The vehicle sensor 15 is a sensor that acquires traveling information and a motion state of the own vehicle such as driving information of an engine, operation information of a brake, and operation information of a steering wheel.

The external sensor 16 includes a camera sensor, a radar sensor, and the like. The camera sensor is a sensor that acquires object information from an image around the own vehicle. The radar sensor is a sensor that acquires object information detected at a predetermined distance around the own vehicle. Note that the object information includes the size, position, speed, acceleration, direction, and type of the detected object, as well as the configuration, position, direction, detection area, specification, and the like of the used sensor. In the following description, the information detected by the vehicle sensor 15 and the external sensor 16 may be collectively referred to as sensor data.

The map device 17 includes a reception device that receives a global navigation satellite system (GNSS) signal transmitted from a satellite of the GNSS, a map database, and a locator. The map device 17 is a device that calculates an own vehicle position by a locator based on the received GNSS signal, selects a peripheral map from a map database, and outputs the own vehicle position and the peripheral map.

The vehicle control unit 18 is a device that determines whether to execute advanced driving support or automatic driving and controls the vehicle. The vehicle control unit 18 receives sensor data, an own vehicle position, and a peripheral map, calculates an action, a route, a speed, and the like necessary for advanced driving support or automatic driving by built-in vehicle control software, and controls an actuator of the vehicle to steer and accelerate/decelerate the vehicle. Further, the vehicle control unit 18 receives the vehicle control software distributed from the software distribution unit 14, and updates the built-in vehicle control software to the latest program.

When recognizing an accident or trouble during traveling of the vehicle, the specific scene extracting unit 19 determines the type of traffic scene corresponding to the recognition result. The specific scene extracting unit 19 creates specific scene information including scene type data indicating the determined type of traffic scene, sensor data, control data of vehicle control software, and position data indicating an own vehicle position, and transmits the created specific scene information to the first information processing apparatus 1. The specific scene extracting unit 19 may transmit the specific scene information for each scene type delimiter. The scene type data includes, for example, a collision, a rear-end collision, a contact, a near miss, a failure, a malfunction, and the like, and includes not only an event that has occurred in the own vehicle but also an event that has occurred in a peripheral vehicle. The control data includes an input value of control, a determination value of control, a state value of control, and an output of control. The control data is necessary for enabling the vehicle control software to execute control based on past determination results from the simulation start time point when the traffic simulation unit 10 of the second information processing apparatus 7 simulates the traffic scene. As a result, although the specific scene information has each piece of information for each time, since the specific scene information includes control data of the vehicle control software, there is an advantage that the recording time can be shortened. In addition, the type of traffic scene can be determined by comparing sensor data of the own vehicle, the own vehicle position, a peripheral map, and the like with an information database (not illustrated) of traffic scenes generated in the past, as in a known technology (for example, Patent Literature 2).

Returning to the description of the first relay server SV1, the first information processing apparatus 1 will be described.

The receiving unit 2 is a functional block that receives specific scene information from a plurality of vehicles. For example, the receiving unit 2 receives the specific scene information from the first vehicle V1, and further receives the specific scene information from the second vehicle V2 and the third vehicle V3 around the first vehicle V1.

The specific scene integration unit 3 is a functional block that creates one piece of integrated specific scene information for each traffic scene using the plurality of pieces of input specific scene information. For example, the specific scene integration unit 3 inspects the contents of the specific scene information of the first vehicle V1, and the second vehicle V2 and the third vehicle V3 around the first vehicle V1, respectively, and refers to the specific scene information of the second vehicle V2 and the third vehicle V3 to correct missing, error, and invalid value portions in the specific scene information of the first vehicle V1, thereby creating integrated specific scene information in which the specific scene information of the first vehicle V1 is correctly corrected.

The scene adaptation determination unit 4 is a functional block that simulates behaviors of a plurality of vehicles based on the input integrated specific scene information. The scene adaptation determination unit 4 determines whether or not the simulation result adapts to the traffic scene indicated by the scene type data of the integrated specific scene information. The scene adaptation determination unit 4 excludes the integrated specific scene information that does not adapt to the traffic scene, and sends the integrated specific scene information that adapts to the traffic scene to the parameter conversion unit 5 in order to convert the integrated specific scene information into parameters to be used for software update.

The parameter conversion unit 5 is a functional block that converts the input integrated specific scene information into parameters for reproducing the traffic scene. The parameter generated by the conversion has a smaller data size than the integrated specific scene information, and is used by the traffic simulation unit 10 of the second information processing apparatus 7 to define a model parameter of each model of the simulation execution unit 103 described later. The parameter includes information such as a classification, a scene type, control data, a vehicle position, an object type/shape, a size, a vehicle behavior, and an operation plan.

The transmission unit 6 is a functional block that transmits the converted parameter to the second information processing apparatus 7.

The first information processing apparatus 1 is implemented as one function of a first relay server SV1 which is a computer including an arithmetic device, a memory, and a communication interface. The arithmetic device executes a program stored in the memory. The arithmetic device executes the program, thereby implementing the function provided by the first information processing apparatus 1. Note that the arithmetic device may include a hardware arithmetic device (for example, ASIC, FPGA, or the like) in addition to a processor that executes a program. The memory includes a ROM which is a nonvolatile storage element and a RAM which is a volatile storage device. The ROM stores an invariable program (for example, BIOS) and the like. The RAM is a high-speed and volatile storage device such as a dynamic random access memory (DRAM), and temporarily stores a program executed by the arithmetic device and data used when the program is executed.

The program executed by the arithmetic device is provided to the first information processing apparatus 1 (the first relay server SV1) via a removable medium (CD-ROM, flash memory, etc.) or a network, and is stored in a nonvolatile auxiliary storage device which is a non-transitory storage medium. Therefore, the first information processing apparatus 1 (first relay server SV1) preferably includes an interface that reads data from a removable medium.

The first information processing apparatus 1 is a computer system configured on one computer physically or on one or a plurality of computers logically or physically configured, and may operate on a virtual computer constructed on a plurality of physical computer resources. For example, each processing executed by the arithmetic device may operate on a separate physical or logical computer, or may operate on one physical or logical computer in combination of a plurality of processing. Furthermore, the first information processing apparatus 1 may be implemented in an in-vehicle electronic control device as in an embodiment described later, or may be implemented in a management server.

The software distribution unit 14 is a functional block that distributes distributed vehicle control software to a plurality of vehicles.

Returning to the management server SV2, the second information processing apparatus 7 will be described.

The receiving unit 8 is a functional block that receives parameters from a plurality of relay servers.

The parameter management unit 9 is a functional block that manages parameters. The user of the management server SV2 can select an arbitrary parameter from the parameter group stored in the parameter management unit 9 and obtain a simulation result from the parameter and the vehicle control software by the traffic simulation unit 10.

The traffic simulation unit 10 is a functional block that reproduces a traffic scene by simulation using input parameters and vehicle control software.

The event analysis unit 11 is a functional block that analyzes the event of the vehicle control software using the simulation result of the traffic simulation unit 10. From a plurality of events of the vehicle control software, types, numbers, occurrence timings (date, software version, production lot, etc.), occurrence places, occurrence environments, assumed causes, and the like of the events are analyzed and clarified, and information useful for modification of the vehicle control software is output.

The software management unit 12 is a functional block that manages vehicle control software. When simulating the traffic scene in the traffic simulation unit 10, any vehicle control software received from the software management unit 12 can be used as the vehicle control model to be used. In addition, in order to distribute the updated vehicle control software to the vehicle, the software management unit 12 extracts a difference portion between the program before the update and the program after the update to create the distributed vehicle control software.

The transmission unit 13 is a functional block that transmits the distributed vehicle control software to a plurality of relay servers.

The configuration diagram of the software update system SYS1 illustrated in FIG. 1 has been described above.

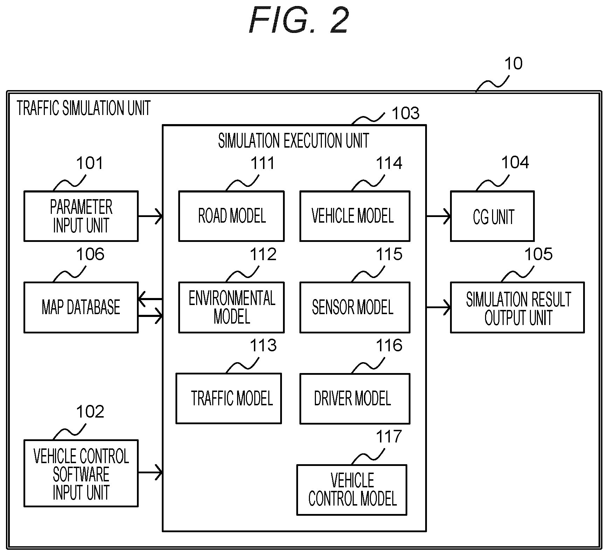

FIG. 2 is a configuration diagram of the traffic simulation unit 10. Hereinafter, description will be given with reference to FIG. 2.

The traffic simulation unit 10 includes a parameter input unit 101, a vehicle control software input unit 102, a simulation execution unit 103, a CG unit 104, a simulation result output unit 105, and a map database 106. The simulation execution unit 103 includes a road model 111, an environmental model 112, a traffic model 113, a vehicle model 114, a sensor model 115, a driver model 116, and a vehicle control model 117. The traffic simulation unit 10 is a simulator in which each model of the simulation execution unit 103 autonomously operates in accordance with the setting contents of the model parameters. Therefore, a desired traffic scene can be simulated only by changing the definition of the model parameters.

The parameter input unit 101 is a functional block to which parameters are input from the parameter management unit 9, and analyzes the input parameters to define model parameters of the road model 111, the environmental model 112, the traffic model 113, the vehicle model 114, the sensor model 115, the driver model 116, and the vehicle control model 117. Note that the parameter control data is defined as a model parameter of the vehicle control model 117 by the parameter input unit 101.

The vehicle control software input unit 102 is a functional block to which a program of vehicle control software is input from the software management unit 12, and outputs the program to the vehicle control model 117 of the simulation execution unit 103 in order to simulate the operation of the input program.

The simulation execution unit 103 is a functional block that executes a simulation of a traffic scene using a plurality of built-in models, and controls the entire operation of the traffic simulation unit 10 such as start and stop of the simulation. The simulation execution unit 103 incorporates the road model 111, the environmental model 112, the traffic model 113, the vehicle model 114, the sensor model 115, the driver model 116, and the vehicle control model 117.

The road model 111 is a model that simulates a traffic light, a sign, a sidewalk, a bicycle road, and the like in addition to a road on which a vehicle travels, an intersection, a junction, a branch, a tunnel, and a three-dimensional intersection. The environmental model 112 is a model that simulates weather, air temperature, wind, time, and the like in addition to a building, a feature, a ground surface, a wall, and a signboard. The traffic model 113 is a model that simulates a vehicle, a two-wheeled vehicle, a bicycle, a pedestrian, and the like around the own vehicle. The vehicle model 114 is a model that simulates an own vehicle. The sensor model 115 is a model that simulates a sensor installed in the own vehicle. The driver model 116 is a model that simulates a driver who drives the own vehicle. The vehicle control model 117 is a model that simulates a vehicle control unit.

The CG unit 104 is a functional block that visualizes a simulation result of each model calculated by the simulation execution unit 103 using computer graphics (CG).

The simulation result output unit 105 is a functional block that stores and outputs the result of the simulation executed by the simulation execution unit 103 for each simulation execution.

The map database 106 stores map information usable by the simulation execution unit 103. On the basis of position information as a parameter, map information necessary for simulation is acquired and transferred to the road model 111 and the environmental model 112. As a result, the road model 111 can simulate a road, an intersection, a traffic light, a sign, and the like in the same manner as an actual place, and the environmental model 112 can simulate a building, a feature, a ground surface, and the like in the same manner as an actual place.

The configuration diagram of the traffic simulation unit 10 illustrated in FIG. 2 has been described above.

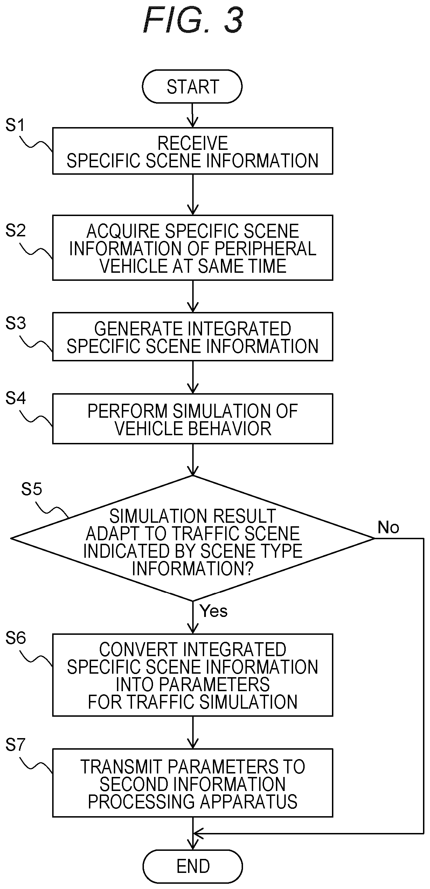

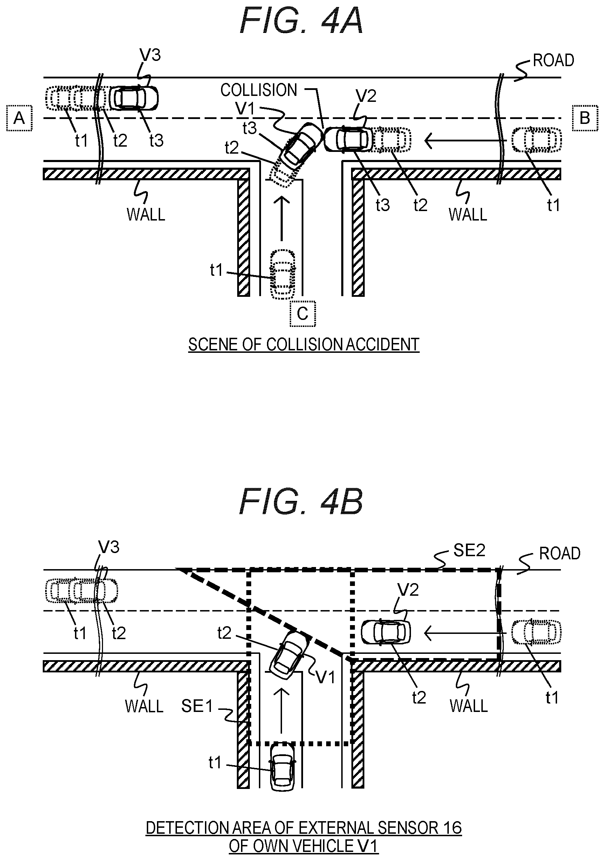

FIG. 3 is a flowchart of processing executed by the first information processing apparatus 1, and FIG. 4 is a specific example prepared for description of the flowchart of FIG. 3, and is a traffic scene of a collision accident.

Here, a scene of a collision accident in FIG. 4A will be described. The road is a T-shaped intersection without a traffic light, and own vehicle V1 is about to turn right from point C toward point B. Peripheral vehicle V2 travels straight from point B toward point A. Peripheral vehicle V3 travels straight from point A toward point B. The T-shaped intersection is surrounded by walls, and from point C, point A and point B are blind spots. t1, t2, and t3 indicate time, the time advances in the order of t1, t2, and t3, and the position of each vehicle at each time is also illustrated. At time t3, the own vehicle V1 and the peripheral vehicle V2 cause a collision accident. In addition, the peripheral vehicle V3 is traveling to the vicinity of the colliding own vehicle V1 and the peripheral vehicle V2.

Next, the detection area of the external sensor 16 of the own vehicle V1 in FIG. 4B will be described. FIG. 4B illustrates the detection area SE1 at time t1 and the detection area SE2 at time t2 of the external sensor 16 of the own vehicle V1. At time t1, in the detection area SE1, the peripheral vehicle V2 and the peripheral vehicle V3 cannot be detected due to an influence of a wall around the intersection. At time t2, in the detection area SE2, the peripheral vehicle V2 approaching the own vehicle V1 can be detected, but the peripheral vehicle V3 cannot be detected. This indicates that the external sensor 16 of the own vehicle V1 cannot detect the detection target even if the detection target is nearby due to a blind spot caused by a shielding object such as a wall.

The flowchart of FIG. 3 will be described with reference to specific examples of FIGS. 4A and 4B.

In step S1, the receiving unit 2 receives specific scene information from own vehicle V1. In an example, when a collision accident between the own vehicle V1 and a peripheral vehicle V2 occurs at time t3, the own vehicle V1 transmits specific scene information traced back to time t1 to the first information processing apparatus 1, and the receiving unit 2 receives the specific scene information. The scene type data in the own vehicle V1 is "own vehicle collision".

The time t1 that is the start point of the specific scene information is a time that is a predetermined time before the time at which the event indicated by the specific scene information has occurred, and may be set as a delimiter of the type of the scene, a time at which the change in the control data is small (if the change in the control data is large, the time is set to a slightly earlier time), or a change point of the place (for example, a risk attached to a place) .

In step S2, the receiving unit 2 also receives the specific scene information from the peripheral vehicle V2 and the peripheral vehicle V3. In the example illustrated in FIG. 4A, when a collision accident between the peripheral vehicle V2 and the own vehicle V1 occurs, the peripheral vehicle V2 transmits specific scene information traced back to time t1 to the first information processing apparatus 1, and the receiving unit 2 receives the specific scene information. In addition, when recognizing the collision accident between the peripheral vehicle V2 and the vehicle V1 at time t3, the peripheral vehicle V3 transmits the specific scene information traced back to time t1 to the first information processing apparatus 1, and the receiving unit 2 receives the specific scene information. The scene type data in the peripheral vehicle V2 is "own vehicle collision", and the scene type data in the peripheral vehicle V3 is "another vehicle collision".

In step S3, the specific scene integration unit 3 examines the contents of the specific scene information of the own vehicle V1, the peripheral vehicle V2, and the peripheral vehicle V3, and refers to the specific scene information of the peripheral vehicle V2 and the specific scene information of the peripheral vehicle V3 to correct missing, error, and invalid value portions in the specific scene information of the own vehicle V1, thereby creating correctly corrected integrated specific scene information of the own vehicle V1.

Here, the necessity of the integrated specific scene information will be described using an example. First, in order for the traffic simulation unit 10 to reproduce a traffic scene by simulation, correct specific scene information in the period from time t1 to time t3 is required. However, as estimated from the detection area of the external sensor 16 of the own vehicle V1 in FIG. 4B, even if the simulation is performed using only the specific scene information of the own vehicle V1, the information of the peripheral vehicle V2 is missing at time t1, and the information of the peripheral vehicle V3 is missing at times t1 and t2. Therefore, correct arithmetic processing cannot be performed by the scene adaptation determination unit 4 and the parameter conversion unit 5 in the subsequent stage, and inconvenience occurs. Therefore, in step S3, it is necessary to create integrated specific scene information in which the specific scene information of the own vehicle V1 is correctly corrected using the specific scene information of the peripheral vehicles V2 and V3 at the same time.

In step S4, the scene adaptation determination unit 4 receives the integrated specific scene information and simulates behaviors of a plurality of vehicles.

In step S5, the scene adaptation determination unit 4 determines whether or not the simulation result adapts to the traffic scene indicated by the scene type data of the integrated specific scene information. If the simulation result adapts to the traffic scene (step S5: Yes), the process proceeds to step S6, and if the simulation result does not adapt to the traffic scene (step S5: No), the process ends.

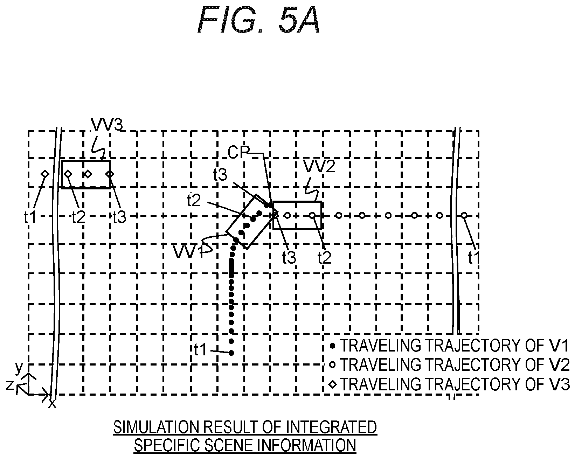

The simulation result of the integrated specific scene information illustrated in FIG. 5A is a result of the scene adaptation determination unit 4 simulating the integrated specific scene information. The scene adaptation determination unit 4 extracts a traveling trajectory of the own vehicle V1, a traveling trajectory of the peripheral vehicle V2, and a traveling trajectory of the peripheral vehicle V3 from the integrated specific scene information, and plots the extracted traveling trajectories in an orthogonal coordinate system (X axis, Y axis, Z axis). The scene adaptation determination unit 4 determines an outer shape VV1 of the own vehicle V1 on the traveling trajectory of the own vehicle V1, and similarly determines an outer shape VV2 of the peripheral vehicle V2 and an outer shape VV3 of the peripheral vehicle V3. The scene adaptation determination unit 4 superimposes the determined outer shape of the vehicle on the traveling trajectory of each vehicle. Then, the scene adaptation determination unit 4 checks the positional relationship of the outer shapes of the respective vehicles on the basis of the scene type data. For example, in the scene of the collision accident illustrated in FIG. 4A, since the scene type data of the own vehicle V1 and the peripheral vehicle V2 is "own vehicle collision" and the scene type of the peripheral vehicle V3 is "another vehicle collision", the scene adaptation determination unit 4 obtains a collision point CP between the own vehicle V1 and the peripheral vehicle V2 from the simulation result. FIG. 5A illustrates a state in which the scene adaptation determination unit 4 obtains the collision point CP. Since the collision point CP suitable for the "own vehicle collision" of the scene type data of the own vehicle V1 is obtained from the simulation result, the scene adaptation determination unit 4 determines this as valid integrated specific scene information and proceeds to step S6.

In step S6, the parameter conversion unit 5 converts the integrated specific scene information into parameters. The traffic simulation unit 10 is a simulator in which each model autonomously operates in accordance with the setting contents of the model parameters. Therefore, since the parameter does not need to be defined for each time, there is an advantage that the data size of the parameter itself is small.

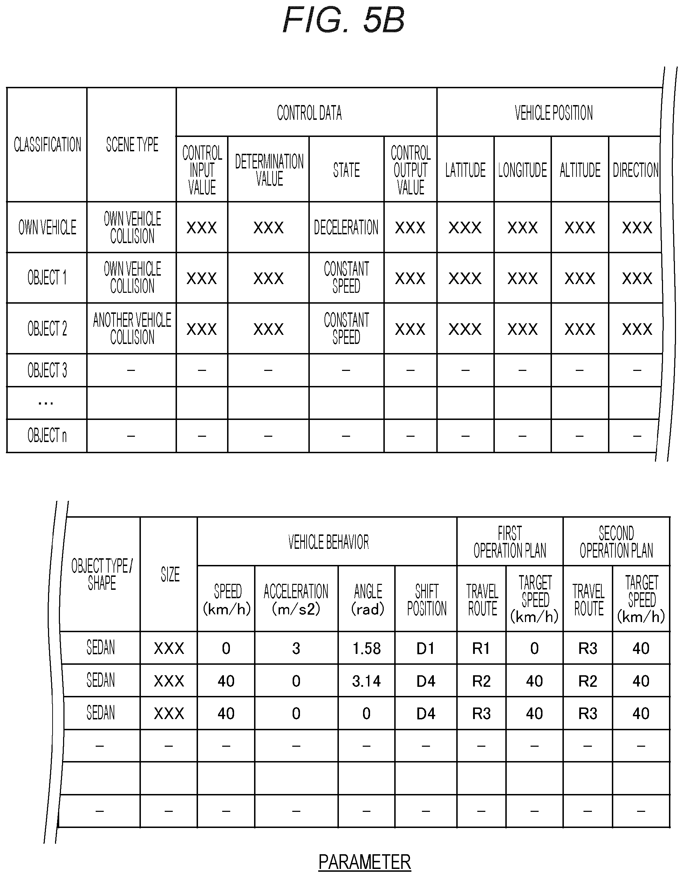

FIG. 5B is a diagram illustrating an example of typical setting contents among parameters corresponding to the traffic scene of the scene of the collision accident in FIG. 4. More detailed information may be set in the actual parameter. Each term of the parameters will be described below.

In a classification term of the parameter, an own vehicle and an object are set, and the object increases or decreases according to a traffic scene. In a scene type term of the parameter, scene type data is set. In a control data term of the parameter, control data at the simulation start time is set. For example, in the case of the traffic scene of the scene of the collision accident illustrated in FIG. 4A, time t1 is the simulation start time. In a vehicle position term of the parameter, latitude, longitude, altitude, direction, and the like at the simulation start time are set. Note that the vehicle position may be set in an orthogonal coordinate system defined by the traffic simulation unit 10. In an object type/shape term of the parameter, type and shape of the own vehicle and the object are set. In the example illustrated in FIG. 5B, the object type/shape is a sedan (vehicle), but there is also a case where the object is a moving object having another shape or form such as a truck, a two-wheeled vehicle, a pedestrian, or a bicycle. In a size term of the parameter, sizes (WIDTH, LENGTH, HEIGHT) of the own vehicle and the object are set. In a vehicle behavior term of the parameter, a speed, an acceleration, an angle, a shift position, and the like at the simulation start time are set. In a first operation plan term and a second operation plan term of the parameter, the behaviors of the own vehicle and another object from the simulation start time are set. The operation plan is increased or decreased according to the traffic scene.

In step S7, the transmission unit 6 transmits the parameter to the second information processing apparatus 7 and ends the flow.

The above is the description of the flowchart of the processing executed by the first information processing apparatus 1 illustrated in FIG. 3.

According to a first embodiment of the present invention, a first information processing apparatus 1 in a software update system SYS1 includes: an arithmetic device that executes arithmetic processing and a storage device accessible by the arithmetic device; a receiving unit 2 that receives specific scene information of an own vehicle V1, a peripheral vehicle V2, and a peripheral vehicle V3, including scene type data indicating a type of a predetermined traffic scene recognized by a vehicle, sensor data collected by a vehicle sensor 15 and an external sensor 16 provided in the vehicle, control data by vehicle control software of a vehicle control unit 18, and position data of the vehicle collected by a map device 17; a specific scene integration unit 3 that creates integrated specific scene information obtained by correcting the specific scene information of the own vehicle V1 using the specific scene information of the peripheral vehicle V2 and the peripheral vehicle V3; a scene adaptation determination unit 4 that simulates, by the arithmetic device, a behavior of the vehicle using the integrated specific scene information and determines whether or not a result of the simulation adapts to a traffic scene indicated by the scene type data; a parameter conversion unit 5 that converts, by the arithmetic device, the integrated specific scene information determined that the result of the simulation adapts to the traffic scene and generates a parameter for reproducing the traffic scene in another information processing apparatus (a traffic simulation unit 10 of a second information processing apparatus 7); and a transmission unit 6 that transmits the generated parameter to the second information processing apparatus 7. Therefore, a recording time of specific scene information indicating a traffic scene such as an accident or a trouble during traveling of the vehicle can be shortened, and the specific scene information can be converted into a parameter having a small data size, so that a processing load of a network, a computer such as a relay server and a management server, and a network device can be reduced.

Note that the information processing apparatus of the present invention is not limited to being mounted on a relay server. In order to reduce the processing load of the network and the management server, the present invention can be implemented in various places.

### <Second Embodiment>

Next, a second embodiment of the present invention will be described. In the second embodiment, a first information processing apparatus 201 is mounted on an in-vehicle electronic control device. In the second embodiment, differences from the first embodiment will be mainly described, and description of the same configuration and processing as those of the first embodiment will be omitted.

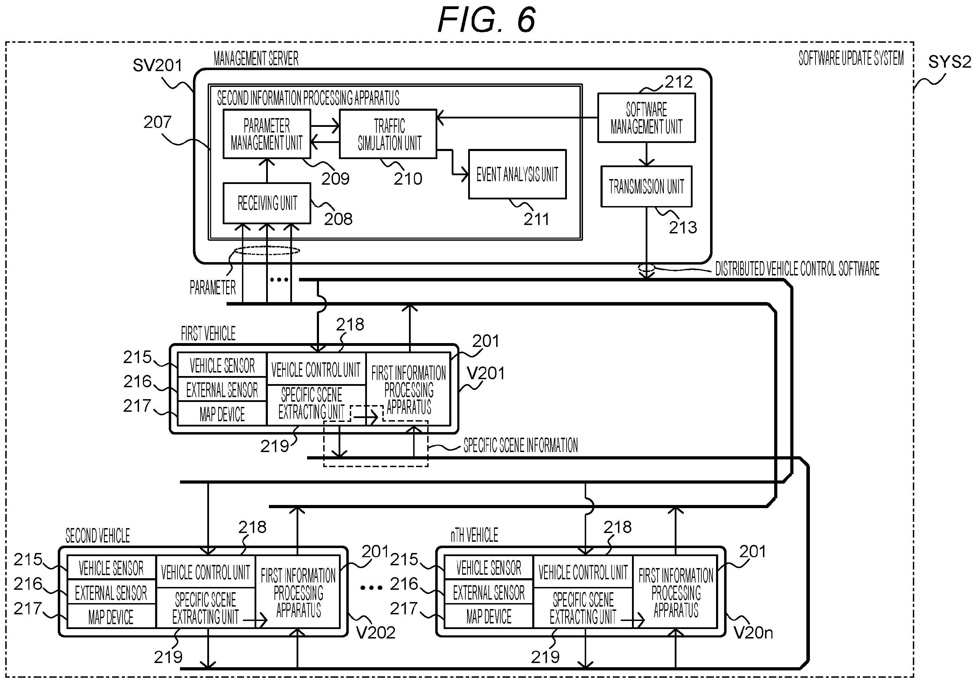

FIG. 6 is a configuration diagram of a software update system SYS2. Hereinafter, the software update system SYS2 will be described with reference to FIG. 6.

The management server SV201 includes a second information processing apparatus 207, a software management unit 212, and a transmission unit 213. The second information processing apparatus 207 includes a receiving unit 208, a parameter management unit 209, a traffic simulation unit 210, and an event analysis unit 211.

The first vehicle V201 includes a vehicle sensor 215, an external sensor 216, a map device 217, a vehicle control unit 218, a specific scene extracting unit 219, and a first information processing apparatus 201. These configurations are the same for a second vehicle V202 and a third vehicle V203.

The management server SV201 is connected to a plurality of vehicles by wireless communication, and the vehicles are also wirelessly connected to each other. In FIG. 6, for the sake of explanation, a configuration in which the management server SV201, the first vehicle V201, the second vehicle V202, and the nth vehicle V20n are connected is illustrated, and illustration of other vehicles is omitted.

Here, the first vehicle V201 will be described.

The first information processing apparatus 201 is implemented as one function of an in-vehicle electronic control device, and the in-vehicle electronic control device is a computer including an arithmetic device, a memory, and a communication interface. The arithmetic device executes a program stored in the memory. The arithmetic device executes the program, thereby implementing the function provided by the first information processing apparatus 1. Note that the arithmetic device may include a hardware arithmetic device (for example, ASIC, FPGA, or the like) in addition to a processor that executes a program. The memory includes a ROM which is a nonvolatile storage element and a RAM which is a volatile storage device. The ROM stores an invariable program (for example, BIOS) and the like. The RAM is a high-speed and volatile storage device such as a dynamic random access memory (DRAM), and temporarily stores a program executed by the arithmetic device and data used when the program is executed.

The vehicle sensor 215 is a sensor that acquires traveling information and a motion state of the own vehicle such as driving information of an engine, operation information of a brake, and operation information of a steering wheel.

The external sensor 216 includes a camera sensor, a radar sensor, and the like. The camera sensor is a sensor that acquires object information from an image around the own vehicle. The radar sensor is a sensor that acquires object information detected at a predetermined distance around the own vehicle. Note that the object information includes the size, position, speed, acceleration, direction, and type of the detected object, as well as the configuration, position, direction, detection area, specification, and the like of the used sensor. In the following description, the information detected by the vehicle sensor 215 and the external sensor 216 may be collectively referred to as sensor data.

The map device 217 includes a reception device that receives a global navigation satellite system (GNSS) signal transmitted from a satellite of the GNSS, a map database, and a locator. The map device 217 is a device that calculates an own vehicle position by a locator based on the received GNSS signal, selects a peripheral map from a map database, and outputs the own vehicle position and the peripheral map.

The vehicle control unit 218 is a device that determines whether to execute advanced driving support or automatic driving and controls the vehicle. The vehicle control unit 218 receives sensor data, an own vehicle position, and a peripheral map, calculates an action, a route, a speed, and the like necessary for advanced driving support or automatic driving by built-in vehicle control software, and controls an actuator of the vehicle to steer and accelerate/decelerate the vehicle. In addition, the vehicle control unit 218 receives the vehicle control software distributed from the transmission unit 213, and updates the built-in vehicle control software to the latest program.

When recognizing an accident or trouble during traveling of the vehicle, the specific scene extracting unit 219 determines the type of traffic scene corresponding to the recognition result. The specific scene extracting unit 219 creates specific scene information including scene type data indicating the determined type of the traffic scene, sensor data, control data of vehicle control software, and position data indicating an own vehicle position, and transmits the created specific scene information to the first information processing apparatus 201. The scene type data includes, for example, a collision, a rear-end collision, a contact, a near miss, a failure, a malfunction, and the like, and includes not only an event that has occurred in the own vehicle but also an event that has occurred in a peripheral vehicle. The control data includes an input value of control, a determination value of control, a state value of control, and an output of control. The control data is necessary for enabling the vehicle control software to execute control based on past determination results from the simulation start time point when the traffic simulation unit 210 of the second information processing apparatus 207 simulates a traffic scene. As a result, although the specific scene information has each piece of information for each time, since the specific scene information includes control data of the vehicle control software, there is an advantage that the recording time can be shortened. In addition, the type of traffic scene can be determined by comparing sensor data of the own vehicle, the own vehicle position, a peripheral map, and the like with an information database (not illustrated) of traffic scenes generated in the past, as in a known technology (for example, Patent Literature 2).

Here, the first information processing apparatus 201 will be described.

The receiving unit (not illustrated) is a functional block that receives specific scene information transmitted from a plurality of vehicles. For example, when receiving the specific scene information from the first vehicle V201, the receiving unit also receives the specific scene information from the second vehicle V202 and the third vehicle V203 around the first vehicle V201.

The specific scene integration unit (not illustrated) is a functional block that creates one piece of integrated specific scene information for each traffic scene using the plurality of pieces of input specific scene information. For example, the specific scene integration unit inspects the contents of the specific scene information of the first vehicle V201, and the second vehicle V202 and the third vehicle V203 around the first vehicle V201, respectively, corrects the missing, error, and invalid value portions in the specific scene information of the first vehicle V201 with reference to the specific scene information of the second vehicle V202 and the third vehicle V203, and creates integrated specific scene information in which the specific scene information of the first vehicle V201 is correctly corrected.

The scene adaptation determination unit (not illustrated) is a functional block that simulates behaviors of a plurality of vehicles based on the input integrated specific scene information. The scene adaptation determination unit determines whether or not the simulation result adapts to the traffic scene indicated by the scene type data of the integrated specific scene information.

The parameter conversion unit (not illustrated) is a functional block that converts the input integrated specific scene information into a parameter having a small data size. The parameter is used by the traffic simulation unit 210 of the second information processing apparatus 207 to define a model parameter of each model of a simulation execution unit (not illustrated) to be described later. The parameter includes information such as a classification, a scene type, control data, a vehicle position, an object type/shape, a size, a vehicle behavior, and an operation plan.

The transmission unit (not illustrated) is a functional block that transmits the converted parameter to the second information processing apparatus 207.

Note that a flowchart of processing executed by the first information processing apparatus 201 is the same as that of the first embodiment (FIG. 3), and thus description thereof is omitted.

Returning to the management server SV201, the second information processing apparatus 207 will be described.

The receiving unit 208 is a functional block that receives parameters from a plurality of vehicles.

The parameter management unit 209 is a functional block that manages parameters. The user of the management server SV201 can select an arbitrary parameter from the parameter group stored in the parameter management unit 209 and obtain a simulation result from the parameter and the vehicle control software by the traffic simulation unit 210.

The traffic simulation unit 210 is a functional block that reproduces a traffic scene by simulation using input parameters and vehicle control software. Note that the configuration of the traffic simulation unit 210 is the same as that of the first embodiment (FIG. 2), and thus description thereof is omitted.

The event analysis unit 211 is a functional block that analyzes the event of the vehicle control software using the simulation result of the traffic simulation unit 210. From a plurality of events of the vehicle control software, types, numbers, occurrence timings (date, software version, production lot, etc.), occurrence places, occurrence environments, assumed causes, and the like of the events are analyzed and clarified, and information useful for modification of the vehicle control software is output.

The software management unit 212 is a functional block that manages vehicle control software. When simulating the traffic scene in the traffic simulation unit 210, any vehicle control software received from the software management unit 212 can be used as the vehicle control model to be used. In addition, in order to distribute the updated vehicle control software to the vehicle, the software management unit 212 extracts a difference portion between the program before the update and the program after the update to create the distributed vehicle control software.

The transmission unit 213 is a functional block that transmits the distributed vehicle control software to a plurality of vehicles.

The configuration diagram of the software update system SYS2 illustrated in FIG. 6 has been described above.

According to the second embodiment of the present invention, the first information processing apparatus 201 in the software update system SYS2 includes: an arithmetic device that executes arithmetic processing and a storage device accessible by the arithmetic device; a receiving unit that receives specific scene information of the own vehicle V201, the peripheral vehicle V202, and the peripheral vehicle V203, including scene type data indicating a type of a predetermined traffic scene recognized by the vehicle, sensor data collected by a vehicle sensor 215 and an external sensor 216 provided in the vehicle, control data by vehicle control software of a vehicle control unit 218, and position data of the vehicle collected by a map device 217; a specific scene integration unit that creates integrated specific scene information obtained by correcting the specific scene information of the own vehicle V201 using the specific scene information of the peripheral vehicle V202 and the peripheral vehicle V203; a scene adaptation determination unit that simulates, by the arithmetic device, a behavior of the vehicle using the integrated specific scene information and determines whether or not a result of the simulation adapts to a traffic scene indicated by the scene type data; a parameter conversion unit that converts, by the arithmetic device, the integrated specific scene information determined that the result of the simulation adapts to the traffic scene and generates a parameter for reproducing the traffic scene in another information processing apparatus (the traffic simulation unit 210 of the second information processing apparatus 207), and a transmission unit that transmits the generated parameter to the second information processing apparatus 207. Therefore, a recording time of specific scene information indicating a traffic scene such as an accident or a trouble during traveling of the vehicle can be shortened, and the specific scene information can be converted into a parameter having a small data size, so that a processing load of a network, a computer such as a management server, and a network device can be reduced. In addition, since the relay server is not provided, the system can be simplified, and the system cost can be reduced.

### <Third Embodiment>

Next, a third embodiment of the present invention will be described. In the third embodiment, a first information processing apparatus 301 is implemented in a management server SV301. In the third embodiment, differences from the first embodiment will be mainly described, and description of the same configuration and processing as those of the first embodiment will be omitted.

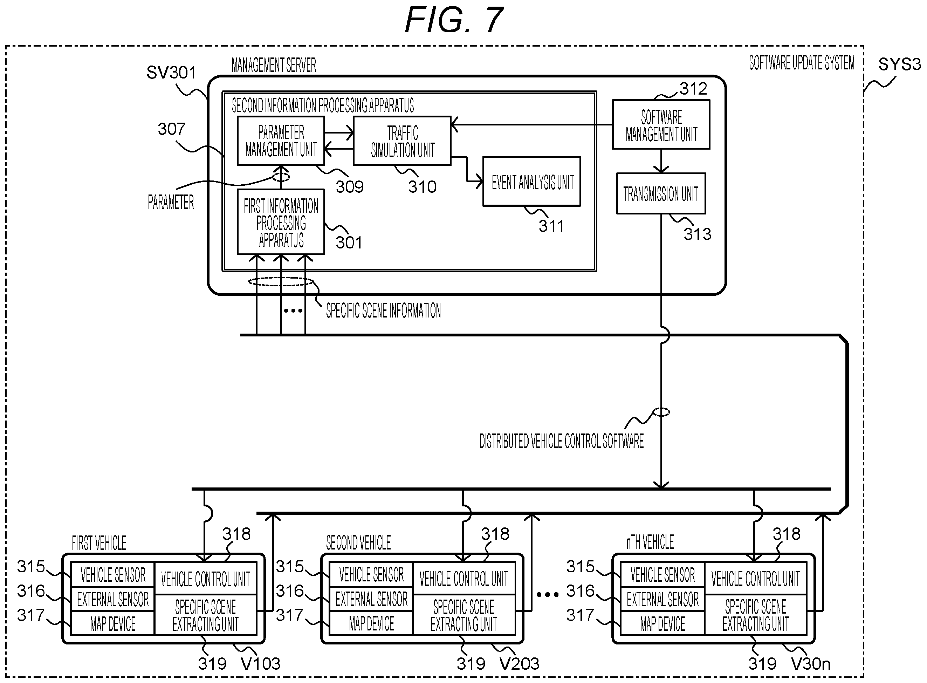

FIG. 7 is a configuration diagram of a software update system SYS3. Hereinafter, the software update system SYS3 will be described with reference to FIG. 7.

The management server SV301 includes a second information processing apparatus 307, a software management unit 312, and a transmission unit 313. The second information processing apparatus 307 includes a first information processing apparatus 301, a parameter management unit 309, a traffic simulation unit 310, and an event analysis unit 311.

The first vehicle V301 includes a vehicle sensor 315, an external sensor 316, a map device 317, a vehicle control unit 318, and a specific scene extracting unit 319. These configurations are the same for a second vehicle V302 and a third vehicle V303.

The management server SV301 is connected to a plurality of vehicles by wireless communication. In FIG. 7, for the sake of explanation, a configuration in which the management server SV301, the first vehicle V301, the second vehicle V302, and the nth vehicle V30n are connected is illustrated, and illustration of other vehicles is omitted.

Here, the first vehicle V301 will be described.

The vehicle sensor 315 is a sensor that acquires traveling information and a motion state of the own vehicle such as driving information of an engine, operation information of a brake, and operation information of a steering wheel.

The external sensor 316 includes a camera sensor, a radar sensor, and the like. The camera sensor is a sensor that acquires object information from an image around the own vehicle. The radar sensor is a sensor that acquires object information detected at a predetermined distance around the own vehicle. Note that the object information includes the size, position, speed, acceleration, direction, and type of the detected object, as well as the configuration, position, direction, detection area, specification, and the like of the used sensor. In the following description, the information detected by the vehicle sensor 315 and the external sensor 316 may be collectively referred to as sensor data.

The map device 317 includes a reception device that receives a global navigation satellite system (GNSS) signal transmitted from a satellite of the GNSS, a map database, and a locator. The map device 317 is a device that calculates an own vehicle position by a locator based on the received GNSS signal, selects a peripheral map from a map database, and outputs the own vehicle position and the peripheral map.

The vehicle control unit 318 is a device that determines whether to execute advanced driving support or automatic driving and controls the vehicle. The vehicle control unit 318 receives sensor data, an own vehicle position, and a peripheral map, calculates an action, a route, a speed, and the like necessary for advanced driving support or automatic driving by built-in vehicle control software, and controls an actuator of the vehicle to steer and accelerate/decelerate the vehicle. In addition, the vehicle control unit 318 receives the vehicle control software distributed from the software management unit 312, and updates the built-in vehicle control software to the latest program.

When recognizing an accident or trouble during traveling of the vehicle, the specific scene extracting unit 319 determines the type of traffic scene corresponding to the recognition result. The specific scene extracting unit 319 creates specific scene information including scene type data indicating the determined type of the traffic scene, sensor data, control data of vehicle control software, and position data indicating an own vehicle position, and transmits the created specific scene information to the first information processing apparatus 301. The scene type data includes, for example, a collision, a rear-end collision, a contact, a near miss, a failure, a malfunction, and the like, and includes not only an event that has occurred in the own vehicle but also an event that has occurred in a peripheral vehicle. The control data includes an input value of control, a determination value of control, a state value of control, and an output of control. The control data is necessary for enabling the vehicle control software to execute control based on past determination results from the simulation start time point when the traffic simulation unit 310 of the second information processing apparatus 307 simulates a traffic scene. As a result, although the specific scene information has each piece of information for each time, since the specific scene information includes control data of the vehicle control software, there is an advantage that the recording time can be shortened. In addition, the type of traffic scene can be determined by comparing sensor data of the own vehicle, the own vehicle position, a peripheral map, and the like with an information database (not illustrated) of traffic scenes generated in the past, as in a known technology (for example, Patent Literature 2).

The management server SV301 will be described.

The first information processing apparatus 301 is implemented as one function of the management server SV301, and the management server SV301 is a computer including an arithmetic device, a memory, and a communication interface. The arithmetic device executes a program stored in the memory. The arithmetic device executes the program, thereby implementing the function provided by the first information processing apparatus 1. Note that the arithmetic device may include a hardware arithmetic device (for example, ASIC, FPGA, or the like) in addition to a processor that executes a program. The memory includes a ROM which is a nonvolatile storage element and a RAM which is a volatile storage device. The ROM stores an invariable program (for example, BIOS) and the like. The RAM is a high-speed and volatile storage device such as a dynamic random access memory (DRAM), and temporarily stores a program executed by the arithmetic device and data used when the program is executed.

The program executed by the arithmetic device is provided to the first information processing apparatus 1 (the management server SV301) via a removable medium (CD-ROM, flash memory, etc.) or a network, and is stored in a nonvolatile auxiliary storage device which is a non-transitory storage medium. Therefore, the first information processing apparatus 1 (the management server SV301) preferably has an interface for reading data from a removable medium.

The first information processing apparatus 1 is a computer system configured on one computer physically or on one or a plurality of computers logically or physically configured, and may operate on a virtual computer constructed on a plurality of physical computer resources. For example, each processing executed by the arithmetic device may operate on a separate physical or logical computer, or may operate on one physical or logical computer in combination of a plurality of processing.

Next, the second information processing apparatus 307 will be first described starting from the first information processing apparatus 301.

The receiving unit (not illustrated) is a functional block that receives specific scene information transmitted from a plurality of vehicles. For example, when receiving the specific scene information from the first vehicle V301, the receiving unit also receives the specific scene information from the second vehicle V302 and the third vehicle V303 around the first vehicle V301.

The specific scene integration unit (not illustrated) is a functional block that creates one piece of integrated specific scene information for each traffic scene using the plurality of pieces of input specific scene information. For example, the specific scene integration unit inspects the contents of the specific scene information of the first vehicle V301, and the second vehicle V302 and the third vehicle V303 around the first vehicle V301, respectively, corrects the missing, error, and invalid value portions in the specific scene information of the first vehicle V301 with reference to the specific scene information of the second vehicle V302 and the third vehicle V303, and creates integrated specific scene information in which the specific scene information of the first vehicle V301 is correctly corrected.

The scene adaptation determination unit (not illustrated) is a functional block that simulates behaviors of a plurality of vehicles based on the input integrated specific scene information. The scene adaptation determination unit determines whether or not the simulation result adapts to the traffic scene indicated by the scene type data of the integrated specific scene information.

The parameter conversion unit (not illustrated) is a functional block that converts the input integrated specific scene information into a parameter having a small data size. The parameter is used by the traffic simulation unit 310 of the second information processing apparatus 307 to define a model parameter of each model of a simulation execution unit (not illustrated) to be described later. The parameter includes information such as a classification, a scene type, control data, a vehicle position, an object type/shape, a size, a vehicle behavior, and an operation plan.

The transmission unit (not illustrated) is a functional block that transmits a parameter to the parameter management unit 309.

Note that a flowchart of processing executed by the first information processing apparatus 301 is the same as that of the first embodiment (FIG. 3), and thus description thereof is omitted.

The parameter management unit 309 is a functional block that manages parameters. The user of the management server SV301 can select an arbitrary parameter from the parameter group stored in the parameter management unit 309 and obtain a simulation result from the parameter and the vehicle control software by the traffic simulation unit 310.

The traffic simulation unit 310 is a functional block that reproduces a traffic scene by simulation using input parameters and vehicle control software. Note that the configuration of the traffic simulation unit 310 is the same as that of the first embodiment (FIG. 2), and thus description thereof is omitted.

The event analysis unit 311 is a functional block that analyzes the event of the vehicle control software using the simulation result of the traffic simulation unit 310. From a plurality of events of the vehicle control software, types, numbers, occurrence timings (date, software version, production lot, etc.), occurrence places, occurrence environments, assumed causes, and the like of the events are analyzed and clarified, and information useful for modification of the vehicle control software is output.

The software management unit 312 is a functional block that manages vehicle control software. When the traffic scene is simulated in the traffic simulation unit 310, any vehicle control software received from the software management unit 312 can be used as the vehicle control model to be used. In addition, in order to distribute the updated vehicle control software to the vehicle, the software management unit 312 extracts a difference portion between the program before the update and the program after the update to create the distributed vehicle control software.

The transmission unit 313 is a functional block that transmits the distributed vehicle control software to a plurality of vehicles.

The configuration diagram of the software update system SYS3 illustrated in FIG. 7 has been described above.

According to the third embodiment of the present invention, the first information processing apparatus 301 in the software update system SYS3 includes: an arithmetic device that executes arithmetic processing and a storage device accessible by the arithmetic device; a receiving unit that receives specific scene information of the own vehicle V301, the peripheral vehicle V302, and the peripheral vehicle V303, including scene type data indicating a type of a predetermined traffic scene recognized by the vehicle, sensor data collected by the vehicle sensor 315 and the external sensor 316 provided in the vehicle, control data by vehicle control software of the vehicle control unit 318, and position data of the vehicle collected by the map device 317; a specific scene integration unit that creates integrated specific scene information obtained by correcting the specific scene information of the own vehicle V301 using the specific scene information of the peripheral vehicle V302 and the peripheral vehicle V303; a scene adaptation determination unit that simulates, by the arithmetic device, a behavior of the vehicle using the integrated specific scene information, and determines whether or not a result of the simulation adapts to a traffic scene indicated by the scene type data; a parameter conversion unit that converts, by the arithmetic device, the integrated specific scene information determined that the result of the simulation adapts to the traffic scene, and generates a parameter for reproducing the traffic scene in another information processing apparatus (the traffic simulation unit 310 of the second information processing apparatus 307); and a transmission unit that transmits the generated parameter to the parameter management unit 309 of the second information processing apparatus 307. Therefore, a recording time of specific scene information indicating a traffic scene such as an accident or a trouble during traveling of the vehicle can be shortened, and the specific scene information can be converted into a parameter having a small data size, so that a processing load of a network, a computer such as a management server, and a network device can be reduced. In addition, since the relay server is not provided, the system can be simplified, and the system cost can be reduced.

### <Fourth Embodiment>

Next, a fourth embodiment of the present invention will be described. In the fourth embodiment, differences from the first embodiment will be mainly described, and description of the same configuration and processing as those of the first embodiment will be omitted.

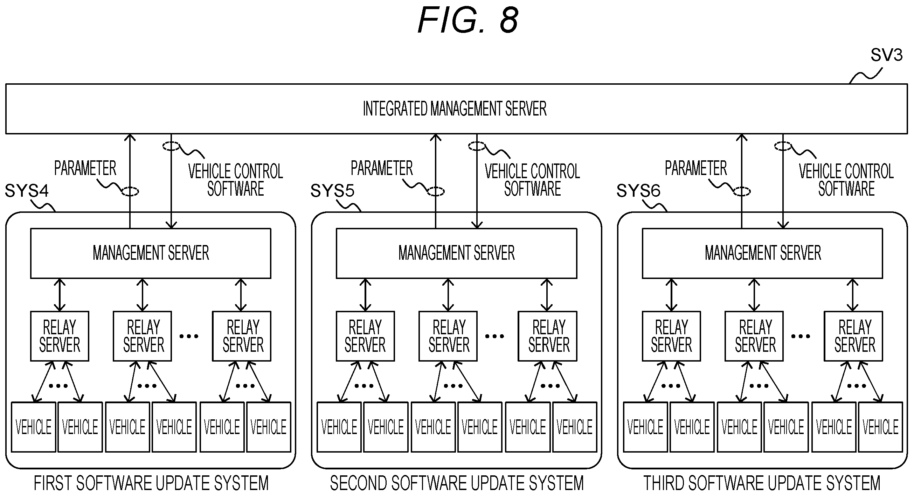

FIG. 8 is a configuration diagram of a system including a plurality of software update systems and an integrated management server.

In the description of the first to third embodiments, an example of one software update system has been described. However, as illustrated in FIG. 8, the information processing apparatus of the first embodiment may be used in a configuration in which a plurality of software update systems (SYS4, SYS5, SYS6) and an integrated management server SV3 that manages the software update systems are provided. In FIG. 8, the first software update system SYS4, the second software update system SYS5, and the third software update system SYS6 are connected to the integrated management server SV3 via a network. The integrated management server SV3 may have a configuration similar to that of the management server SV2 of the first embodiment, and receives a parameter and transmits vehicle control software. For example, when a vehicle equipped with an advanced driving support system or an automatic driving technology is used in a plurality of regions (for example, countries), there is a method of arranging each software update system in each country and arranging an integrated management server in a vehicle manufacturing country. In this way, the vehicle control software can be promptly updated across regions, and the quality of the software can be maintained and improved.

Note that the fourth embodiment may be configured by applying the software update system of the second embodiment or the third embodiment other than the first embodiment.

Note that the present invention is not limited to the above-described embodiments, and includes various modifications and equivalent configurations within the spirit of the appended claims. For example, the above-described embodiments have been described in detail for easy understanding of the present invention, and the present invention is not necessarily limited to those having all the described configurations. Further, a part of the configuration of one embodiment may be replaced with the configuration of another embodiment. In addition, the configuration of another embodiment may be added to the configuration of a certain embodiment. In addition, a part of the configuration of each embodiment may be added, deleted, or replaced with another configuration.

In addition, a part or all of the above-described configurations, functions, processing units, processing means, and the like may be implemented by hardware by, for example, designing with an integrated circuit, or may be implemented by software by a processor interpreting and executing a program for implementing each function.

Information such as a program, a table, and a file for implementing each function can be stored in a storage device such as a memory, a hard disk, and a solid state drive (SSD), or a recording medium such as an IC card, an SD card, and a DVD.

In addition, the control lines and the information lines indicate what is considered to be necessary for the description, and do not necessarily indicate all the control lines and the information lines necessary for the implementation. In practice, it may be considered that almost all the configurations are mutually connected.

### Reference Signs List

1, 201, 301 first information processing apparatus
2 receiving unit
3 specific scene integration unit
4 scene adaptation determination unit
5 parameter conversion unit
6 transmission unit
7, 207, 307 second information processing apparatus
8, 208 receiving unit
9, 209, 309 parameter management unit
10, 210, 310 traffic simulation unit
11, 211, 311 event analysis unit
12, 212, 312 software management unit
13, 213, 313 transmission unit
14 software distribution unit
15, 215, 315 vehicle sensor
16, 216, 316 external sensor
17, 217, 317 map device
18, 218, 318 vehicle control unit
19, 219, 319 specific scene extracting unit
101 parameter input unit
102 vehicle control software input unit
103 simulation execution unit
104 CG unit
105 simulation result output unit
106 map database
111 road model
112 environmental model
113 traffic model
114 vehicle model
115 sensor model
116 driver model
117 vehicle control model
SV1, SV201, SV301 management server
SV2 relay server
SV3 integrated management server
SYS1 to SYS6 software update system
V1 first vehicle (own vehicle)
V2 second vehicle (peripheral vehicle)
V3 third vehicle (peripheral vehicle)
V201 to V20n vehicle

## Claims

1. An information processing apparatus in an information collection system that collects information from a plurality of vehicles, the information processing apparatus comprising:
an arithmetic device that executes arithmetic processing and a storage device that can be accessed by the arithmetic device;
a receiving unit that receives specific scene information including scene type data indicating a type of a predetermined traffic scene recognized by a vehicle, sensor data collected by a sensor provided in the vehicle, control data by vehicle control software of the vehicle, and position data of the vehicle;
a scene adaptation determination unit that simulates, by the arithmetic device, a behavior of the vehicle on a basis of the received specific scene information and determines whether or not a result of the simulation adapts to a traffic scene indicated by the scene type data;
a parameter conversion unit that converts, by the arithmetic device, the specific scene information determined that a result of the simulation adapts to the traffic scene, and generates a parameter for reproducing the traffic scene in another information processing apparatus; and
a transmission unit that transmits the generated parameter to the another information processing apparatus.

2. The information processing apparatus according to claim 1, wherein
the receiving unit receives the specific scene information from a first vehicle, and further receives the specific scene information at the same time from a peripheral vehicle existing around the first vehicle, and
the scene adaptation determination unit simulates at least one behavior of the first vehicle and the peripheral vehicle on a basis of the specific scene information received from the first vehicle and the specific scene information received from the peripheral vehicle.

3. The information processing apparatus according to claim 2, further comprising
a specific scene integration unit that creates integrated specific scene information obtained by correcting specific scene information of the first vehicle by using specific scene information of the peripheral vehicle, wherein
the scene adaptation determination unit simulates a behavior of the first vehicle using the integrated specific scene information.

4. The information processing apparatus according to claim 1, wherein
the scene adaptation determination unit
calculates a trajectory of the vehicle based on the received specific scene information, and
simulates a behavior of the vehicle by superimposing an outer shape of the vehicle on the calculated trajectory.

5. The information processing apparatus according to claim 4, wherein
the scene adaptation determination unit
calculates a positional relationship of the outer shapes of a plurality of the vehicles, and
determines whether or not a result of the simulation matches a traffic scene indicated by the scene type data depending on whether the calculated positional relationship of the outer shapes matches the scene type data.

6. The information processing apparatus according to claim 1, wherein
the parameter conversion unit generates a parameter for reproducing the traffic scene a predetermined time before a time at which an event represented by the specific scene information has occurred.

7. The information processing apparatus according to claim 1, wherein
the information collection system constitutes a part of a software update system that distributes the updated vehicle control software, and
the generated parameter is used to update the vehicle control software.

8. The information processing apparatus according to claim 7, wherein
the software update system includes:
a management device that manages distribution of the vehicle control software;
an in-vehicle electronic control device that receives distribution of the vehicle control software; and
a relay device provided between the management device and the in-vehicle electronic control device, and
the information processing apparatus is provided in the relay device.

9. The information processing apparatus according to claim 7, wherein
the software update system includes:
a management device that manages distribution of the vehicle control software; and
an in-vehicle electronic control device that receives distribution of the vehicle control software, and
the information processing apparatus is provided in the in-vehicle electronic control device.

10. The information processing apparatus according to claim 7, wherein
the software update system includes:
a management device that manages distribution of the vehicle control software; and
an in-vehicle electronic control device that receives distribution of the vehicle control software, and
the information processing apparatus is provided in the management device.

11. An information processing method, that is an information collection method by which an information processing apparatus collects information from a plurality of vehicles, the information processing apparatus including: an arithmetic device that executes arithmetic processing; and a storage device that can be accessed by the arithmetic device, the information collection method comprising:
a reception step of receiving, by the information processing apparatus, specific scene information including scene type data indicating a type of a predetermined traffic scene recognized by a vehicle, sensor data collected by a sensor provided in the vehicle, control data by vehicle control software of the vehicle, and position data of the vehicle;
a scene adaptation determination step of performing, by the arithmetic device, simulation of a behavior of the vehicle on a basis of the received specific scene information, and determining whether or not a result of the simulation adapts to a traffic scene indicated by the scene type data;
a parameter conversion step of converting, by the arithmetic device, the specific scene information determined that a result of the simulation adapts to the traffic scene, and generating a parameter for reproducing the traffic scene in another information processing apparatus; and
a transmission step of transmitting, by the information processing apparatus, the generated parameter to the another information processing apparatus.

12. The information processing method according to claim 11, wherein
in the reception step, the specific scene information is received from a first vehicle, and further the specific scene information at the same time is received from a peripheral vehicle existing around the first vehicle, and
in the scene adaptation determination step, at least one behavior of the first vehicle and the peripheral vehicle is simulated on a basis of the specific scene information received from the first vehicle and the specific scene information received from the peripheral vehicle.
